# FASCICULE DE BREVET EUROPEEN

(11) **EP 3 320 186 B1**
(45) Date de publication et mention de la délivrance du brevet: **25.08.2021**
(21) Numéro de dépôt: 16742374.8
(22) Date de dépôt: 05.07.2016
(51) Int. Cl.: F01D 25/14, F01D 11/08

(54) **ENSEMBLE POUR TURBINE**
ANORDNUNG EINER GASTURBINE
ASSEMBLY OF A GAS TURBINE

(30) Priorité: 06.07.2015 FR 1556382
(43) Date de publication de la demande: 16.05.2018
(73) Titulaire: Safran Aircraft Engines, 75015 Paris (FR)
(72) Inventeur: JOUY, Baptiste Marie Aubin Pierre, 77550 Moissy-Cramayel (FR); MOUSSETTE, Adrien, 77550 Moissy-Cramayel (FR); PELLATON, Bertrand Guillaume Robin, 77550 Moissy-Cramayel (FR); VILLARD, Loïc, 77550 Moissy-Cramayel (FR)
(74) Mandataire: Brevalex
(86) Numéro de dépôt international: PCT/FR2016/051700
(87) Numéro de publication internationale: WO 2017/006045

(56) Documents cités:
- EP-A1- 0 905 353
- EP-A1- 0 905 353
- EP-A1- 2 551 467
- EP-A1- 2 778 369
- US-A1- 2012 057 969
- US-A1- 2013 156 541

## Description

### DOMAINE TECHNIQUE

La présente invention se rapporte au domaine des turbomachines, telles que les moteurs des aéronefs, et concerne plus particulièrement le problème du refroidissement des carters des turbines des turbomachines.

### ÉTAT DE LA TECHNIQUE ANTÉRIEURE

Les performances d'une turbine de turbomachine dépendent de sa capacité à limiter les débits de gaz contournant les aubages fixes et mobiles. En effet, ces débits de gaz, parfois dénommés « débits de by-pass », ne participent pas au travail de la turbine. Pour augmenter le rendement de la turbine, il est donc nécessaire de réduire au mieux les distances radiales, appelées « jeux radiaux », entre les parties fixes et mobiles de la turbine.

A cet effet, des moyens de pilotage des jeux radiaux en sommet des aubes mobiles ont notamment été mis au point. De tels moyens se présentent généralement sous la forme de conduits annulaires qui entourent le carter de la turbine et qui sont parcourus par de l'air de refroidissement prélevé dans une autre partie de la turbomachine. De tels conduits annulaires sont pourvus d'orifices pour injecter l'air de refroidissement sur la surface externe du carter afin de le refroidir et de limiter ainsi ses dilatations thermiques. En particulier, les orifices peuvent avantageusement présenter un axe d'éjection d'air sensiblement orthogonal au carter pour mettre en œuvre une technique couramment dénommée « refroidissement par impact ».

La demande internationale WO2009144191 illustre un exemple de turbine équipée de tels moyens de pilotage des jeux radiaux. EP 2551 467 A1 montre les caractéristiques techniques du préambule de la revendication indépendante 1.

Il existe néanmoins un besoin d'accroître l'efficacité de tels moyens de pilotage des jeux radiaux.

Une solution à cet effet peut consister à augmenter le nombre d'orifices destinés à l'injection de l'air de refroidissement sur le carter.

Toutefois, cette démarche se trouve limitée par l'entraxe minimal imposé en ce qui concerne ces orifices, par les méthodes de fabrication des conduits annulaires précités. A titre d'exemple, cet entraxe peut être de l'ordre de 1,6 mm pour certains types de turbines.

Afin de surmonter cet obstacle, les inventeurs de la présente invention ont envisagé l'utilisation de conduits annulaires pourvus de plusieurs rangées annulaires d'orifices décalés circonférentiellement, de sorte que chaque orifice de l'une des rangées annulaires soit situé circonférentiellement à mi-distance de deux orifices consécutifs d'une rangée annulaire voisine. Une telle configuration permet en effet d'augmenter considérablement le nombre de trous sur une surface donnée, tout en respectant l'entraxe minimal imposé par les méthodes de fabrication.

Cependant, d'après les résultats d'études menées par les inventeurs, les performances obtenues en ce qui concerne le refroidissement du carter se révèlent insuffisantes.

### EXPOSÉ DE L'INVENTION

L'invention a notamment pour but d'apporter une solution efficace à ce problème. Cette invention est présentée dans la revendication 1.

Les inventeurs ont démontré que le manque d'efficacité des configurations à orifices décalés, qu'ils ont testées dans un premier temps, est dû à des interférences entre les jets issus d'orifices voisins appartenant à des rangées annulaires différentes. De telles interférences se sont révélées pénalisantes pour le coefficient d'échange thermique entre les jets d'air et le carter, et donc nuisibles pour le refroidissement de ce carter.

L'invention permet en revanche de limiter ces phénomènes d'interférences, voire de les éviter totalement, et d'améliorer ainsi considérablement le refroidissement du carter.

Les rainures du carter permettent en effet de canaliser les jets d'air issus des orifices du conduit annulaire et de favoriser ainsi une séparation des jets d'air issus d'orifices voisins appartenant à des rangées annulaires différentes.

Il est à noter que le terme « carter » désigne, dans la présente demande de brevet, tout type d'enveloppe délimitant extérieurement le canal d'écoulement des gaz au sein de la turbine.

De préférence, toutes les rainures axiales présentent la même forme.

Les rainures axiales ne présententaucun espacement entre elles.

Dans un mode de réalisation préféré de l'invention, chacune des rainures axiales s'étend continument en regard de plusieurs des orifices appartenant respectivement à plusieurs rangées annulaires non consécutives parmi les rangées annulaires précitées.

De préférence, la distance entre le fond de chacune des rainures axiales et la paroi annulaire radialement interne du conduit annulaire est comprise entre trois fois et cinq fois la profondeur de chacune des rainures axiales.

De préférence, la profondeur de chacune des rainures axiales est sensiblement égale au diamètre des orifices.

L'invention concerne également une turbine pour turbomachine, comprenant un rotor, ainsi qu'un ensemble du type décrit ci-dessus dont le carter entoure le rotor de la turbine.

L'invention concerne enfin une turbomachine pour aéronef, comprenant au moins une turbine du type décrit ci-dessus, ainsi que des moyens d'alimentation en air de refroidissement raccordés audit conduit annulaire.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une vue schématique en coupe axiale d'une turbomachine pour aéronef selon un mode de réalisation préféré de l'invention ;
- la figure 2 est une demi-vue schématique partielle en coupe axiale d'un ensemble comprenant un carter d'une turbine de la turbomachine de la figure 1 ainsi qu'un conduit annulaire entourant ce carter pour injecter de l'air de refroidissement sur le carter ;
- la figure 3 est une vue schématique partielle en coupe transversale de l'ensemble de la figure 2 ;
- la figure 4 est une vue schématique partielle développée en plan du carter de l'ensemble de la figure 2, illustrant la projection orthogonale d'orifices du conduit annulaire de l'ensemble, destinés à l'injection de l'air de refroidissement sur le carter.

### EXPOSÉ DÉTAILLÉ D'UN MODE DE RÉALISATION PRÉFÉRÉ

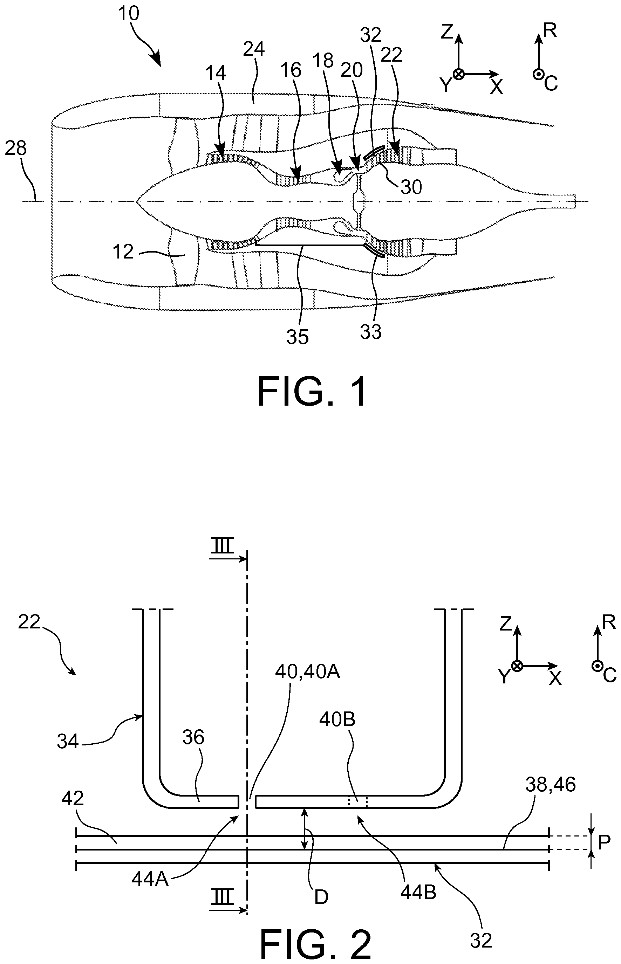

La figure 1 illustre une turbomachine 10 pour aéronef, par exemple un turboréacteur à double flux, comportant de manière générale une soufflante 12 destinée à l'aspiration d'un flux d'air se divisant en aval de la soufflante en un flux primaire alimentant un cœur de la turbomachine et un flux secondaire contournant ce cœur. Le cœur de la turbomachine comporte, de manière générale, un compresseur basse pression 14, un compresseur haute pression 16, une chambre de combustion 18, une turbine haute pression 20 et une turbine basse pression 22. La turbomachine est carénée par une nacelle 24 entourant l'espace d'écoulement 26 du flux secondaire. Les rotors de la turbomachine sont montés rotatifs autour d'un axe longitudinal 28 de cette turbomachine.

Dans la description qui suit, les directions X, Y et Z constituent respectivement les directions longitudinale, transversale, et verticale, de la turbomachine. La direction longitudinale X est également dénommée « direction axiale ». Les directions radiale R et circonférentielle C sont définies par rapport à l'axe longitudinal 28.

D'une manière connue en soi, la turbine basse pression 22 comporte un rotor 30 comprenant une pluralité de disques montés à rotation autour de l'axe longitudinal 28 et pourvus d'aubes mobiles s'étendant dans le passage du flux primaire issu de la chambre de combustion 18. La turbine basse pression 22 comporte en outre des rangées annulaires d'aubes statiques disposées en alternance avec les disques du rotor 30. Enfin, la turbine basse pression 22 comporte un carter 32 qui entoure le rotor 30, et des moyens 33 de pilotage des jeux radiaux au sommet des aubes mobiles. Ces moyens de pilotage des jeux radiaux 33 comprennent typiquement un ou plusieurs conduits annulaires 34 (figure 2), parfois dénommés « rampes », s'étendant autour du carter 32, et raccordés à des moyens 35 d'alimentation en air de refroidissement pour permettre la circulation d'un flux d'air de refroidissement prélevé dans une autre partie de la turbomachine, par exemple dans l'espace d'écoulement 26 du flux secondaire en aval de la soufflante 12. Le carter 32 peut délimiter directement l'espace d'écoulement du flux primaire, ou en variante, ce carter peut servir de support pour une rangée annulaire de secteurs d'anneaux montés bout-à-bout circonférentiellement, en regard de la face radialement interne du carter, et délimitant l'espace d'écoulement du flux primaire.

Chaque conduit annulaire 34 comprend une paroi annulaire radialement interne 36 s'étendant en regard d'une surface externe 38 du carter 32 et pourvue d'orifices 40 destinés à injecter l'air de refroidissement en direction du carter 32 selon une incidence sensiblement normale de manière à refroidir le carter 32 par impact.

Selon une particularité de l'invention, comme le montrent les figures 2 à 4, le carter 32 présente une pluralité de rainures axiales 42. Pour les besoins de la présente description, ces rainures axiales sont considérées comme étant formées d'une alternance circonférentielle de premières rainures 42A et de secondes rainures 42B.

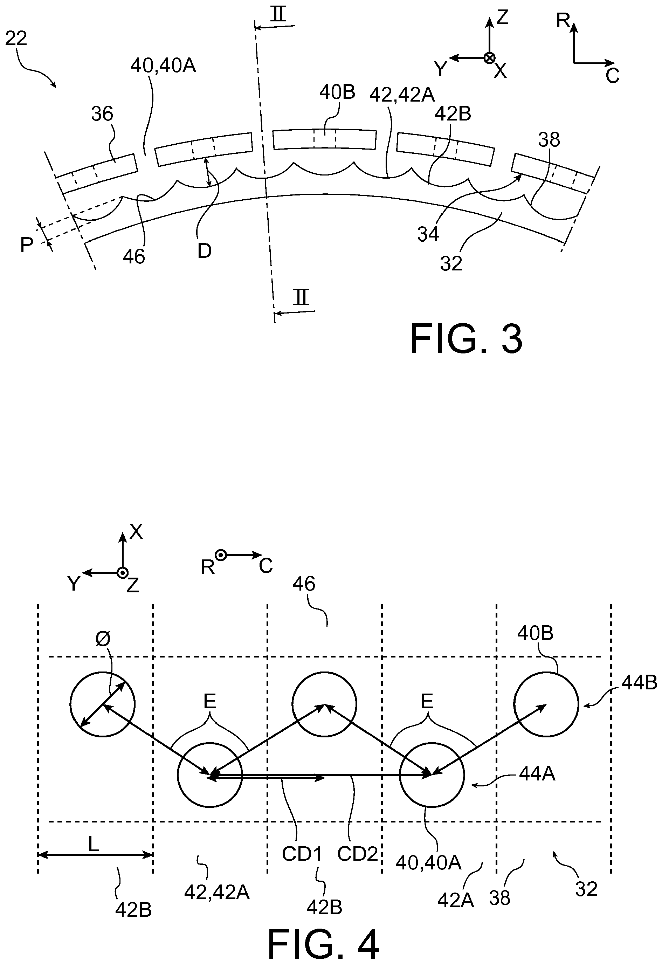

Comme le montre plus particulièrement la figure 4 qui illustre une projection orthogonale d'orifices 40 sur la surface externe 38 du carter 32 représentée développée en plan, les orifices 40 se répartissent en une pluralité de rangées annulaires 44A, 44B, par exemple au nombre de deux, et sont agencés de sorte que les orifices 40A de l'une des rangées annulaires 44A sont centrés par rapport aux premières rainures 42A tandis que les orifices 40B de l'autre rangée annulaire 44B sont centrés par rapport aux secondes rainures 42B.

Plus généralement, dans le cas où le nombre de rangées annulaires d'orifices est supérieur à deux, tout couple de rangées annulaires consécutives est tel que les orifices 40 de l'une des rangées annulaires du couple sont centrés par rapport aux premières rainures 42A tandis que les orifices 40 de l'autre rangée annulaire du couple sont centrés par rapport aux secondes rainures 42B.

Ainsi, chaque orifice 40 de l'une des rangées annulaires est décalé circonférentiellement par rapport aux deux orifices consécutifs d'une rangée annulaire voisine situés au plus près de l'orifice considéré.

Le nombre d'orifices 40 pouvant être agencés sur une superficie donnée est ainsi accru par rapport à celui des conduits annulaires conventionnels, tout en permettant de respecter la valeur minimale d'entraxe E imposée, par exemple égale à 1,6 mm dans le mode de réalisation de l'invention illustré.

Plus spécifiquement, chaque orifice 40A, 40B débouche ainsi en regard d'une rainure axiale 42A, 42B différente des rainures axiales 42B, 42A dans lesquelles débouchent les orifices voisins 40B, 40A qui appartiennent à une autre rangée annulaire que celle de l'orifice considéré.

Les inventeurs ont démontré que les rainures axiales 42 permettent de canaliser les jets d'air de refroidissement issus des orifices 40 et d'éviter que ces jets n'interfèrent entre eux d'une manière nuisible au refroidissement du carter 32.

Dans certaines variantes de réalisation de l'invention, chaque rainure axiale 42 s'étend ainsi continument en regard de plusieurs des orifices 40 qui appartiennent respectivement à plusieurs rangées annulaires 44A ou 44B non consécutives.

Il est à noter que le carter 32 et le ou les conduits annulaires 34 forment un ensemble pour turbine dans la terminologie adoptée dans la présente description.

Dans l'exemple illustré, toutes les rainures axiales présentent la même forme, et en particulier la même largeur L selon la direction circonférentielle.

De plus, chaque première rainure 42A est contigüe aux deux secondes rainures 42B qui lui sont consécutives. Bien évidemment, cela implique que chaque seconde rainure 42B est contigüe aux deux premières rainures 42A qui lui sont consécutives.

Par conséquent, chaque orifice 40A, 40B de l'une des rangées annulaires 42A, 42B est situé à une distance circonférentielle CD1 égale à la moitié de la distance circonférentielle CD2 qui sépare deux orifices consécutifs 40B, 40A d'une rangée annulaire voisine 42B, 42A situés au plus près de l'orifice 40 considéré.

Dans l'exemple illustré, la distance D entre le fond 46 de chacune des rainures axiales et la paroi annulaire radialement interne 36 du conduit annulaire est comprise entre trois fois et cinq fois la profondeur P de chacune des rainures axiales 42.

Dans cet exemple, la distance D est égale à 3 mm environ tandis que la profondeur P est égale à 0,8 mm environ.

De plus, la profondeur P de chacune des rainures axiales 42 est sensiblement égale au diamètre Ø des orifices 40.

Enfin, l'étendue axiale des rainures axiales 42 est déterminée en fonction de la configuration du carter 32 et du ou des conduits annulaires 34, et est de préférence supérieure à 2,5 cm dans le mode de réalisation de l'invention illustré.

Il est à noter que le principe de l'invention, décrit ci-dessus dans le cas d'une turbine basse pression d'un turboréacteur, peut être appliqué de manière analogue à une turbine haute pression d'un turboréacteur ou encore à une turbine d'un turbopropulseur, ou d'une turbomachine à doublet d'hélices non carénées, également dénommée « open rotor », ou plus généralement à tout type de turbine dans tout type de turbomachine.

## Revendications

1. Ensemble pour turbine (22) de turbomachine (10), comprenant un carter (32) et au moins un conduit annulaire (34) entourant le carter, le conduit annulaire étant raccordable à des moyens d'alimentation en air de refroidissement (35) et présentant une paroi annulaire radialement interne (36) pourvue d'orifices (40) agencés en regard d'une surface externe (38) du carter pour refroidir ce carter par impact de jets d'air de refroidissement, **caractérisée en ce que** le carter présente une pluralité de rainures axiales (42) comprenant des premières rainures (42A) et des secondes rainures (42B) disposées en alternance de sorte que chaque première rainure (42A) est contigüe aux deux secondes rainures (42B) qui lui sont consécutives, et **en ce que** les orifices se répartissent en une pluralité de rangées annulaires (44A, 44B) dans lesquelles tout couple de rangées annulaires consécutives (44A, 44B) est tel que les orifices (40A) de l'une (44A) des rangées annulaires du couple sont centrés par rapport aux premières rainures (42A) tandis que les orifices (40B) de l'autre rangée annulaire (44B) du couple sont centrés par rapport aux secondes rainures (42B).

2. Ensemble selon la revendication 1, dans lequel toutes les rainures axiales (42, 42A, 42B) présentent la même forme.

3. Ensemble selon l'une quelconque des revendications 1 à 2, dans lequel chacune des rainures axiales (42) s'étend continument en regard de plusieurs des orifices (40) appartenant respectivement à plusieurs rangées annulaires (44A, 44B) non consécutives.

4. Ensemble selon l'une quelconque des revendications 1 à 3, dans lequel la distance (D) entre le fond (46) de chacune des rainures axiales et la paroi annulaire radialement interne (36) du conduit annulaire (34) est comprise entre trois fois et cinq fois la profondeur (P) de chacune des rainures axiales (42).

5. Ensemble selon l'une quelconque des revendications 1 à 4, dans lequel la profondeur (P) de chacune des rainures axiales est sensiblement égale au diamètre (Ø) des orifices.

6. Turbine (22) pour turbomachine (10), comprenant un rotor (30), ainsi qu'un ensemble (32, 34) selon l'une quelconque des revendications 1 à 5 dont le carter (32) entoure le rotor (30) de la turbine.

7. Turbomachine (10) pour aéronef, comprenant au moins une turbine (22) selon la revendication 6, ainsi que des moyens d'alimentation en air de refroidissement (35) raccordés audit conduit annulaire (34).

## Patentansprüche

1. Anordnung einer Turbine (22) eines Turbotriebwerks (10), mit einem Gehäuse (32) und mindestens einer, das Gehäuse umgebenden, Ringleitung (34), wobei die Ringleitung mit Einrichtungen zum Zuführen von Kühlluft (35) verbindbar ist und eine radial innenliegende ringförmige Wand (36) aufweist, die mit Öffnungen (40) versehen ist, welche gegenüber einer Außenfläche (38) des Gehäuses angeordnet sind, um das Gehäuse durch die Wirkung von Kühlluftströmen zu kühlen, **dadurch gekennzeichnet, dass** das Gehäuse eine Mehrzahl von axialen Nuten (42) mit ersten Nuten (42A) und zweiten Nuten (42B) aufweist, welche abwechselnd derart angeordnet sind, dass jede erste Nut (42A) an zwei zweite Nuten (42B) angrenzt, die sich an diese anschließen, und dass sich die Öffnungen in eine Mehrzahl von ringförmigen Reihen (44A, 44B) aufteilen, in welchen jedes Paar von aufeinanderfolgenden ringförmigen Reihen (44A, 44B) derart ausgeführt ist, dass die Öffnungen (40A) der einen (44A) der ringförmigen Reihen des Paares gegenüber den ersten Nuten (42A) zentriert sind, während die Öffnungen (40B) der anderen ringförmigen Reihe (44B) des Paares gegenüber den zweiten Nuten (42B) zentriert sind.

2. Anordnung nach Anspruch 1, wobei alle axialen Nuten (42, 42A, 42B) dieselbe Form aufweisen.

3. Anordnung nach einem der Ansprüche 1 bis 2, wobei sich jede der axialen Nuten (42) kontinuierlich gegenüber mehreren der Öffnungen (40) erstreckt, die jeweils zu mehreren, nicht aufeinanderfolgenden ringförmigen Reihen (44A, 44B) gehören.

4. Anordnung nach einem der Ansprüche 1 bis 3, wobei der Abstand (D) zwischen dem Boden (46) jeder der axialen Nuten und der radial innenliegenden ringförmigen Wand (36) der Ringleitung (34) im Bereich des Dreifachen bis Fünffachen der Tiefe (P) jeder der axialen Nuten (42) liegt.

5. Anordnung nach einem der Ansprüche 1 bis 4, wobei die Tiefe (P) jeder der axialen Nuten im Wesentlichen gleich dem Durchmesser (Ø) der Öffnungen ist.

6. Turbine (22) für ein Turbotriebwerk (10), mit einem Rotor (30) sowie einer Anordnung (32, 34) nach einem der Ansprüche 1 bis 5, deren Gehäuse (32) den Rotor (30) der Turbine umgibt.

7. Turbotriebwerk (10) für ein Luftfahrzeug, das mindestens eine Turbine (22) nach Anspruch 6 sowie Einrichtungen zum Zuführen von Kühlluft (35) umfasst, welche mit der Ringleitung (34) verbunden sind.

## Claims

1. Assembly for a turbine (22) of a turbine engine (10), comprising a casing (32) and at least one annular duct (34) surrounding the casing, the annular duct being capable of being connected to means for supplying cooling air (35), and having a radially inner annular wall (36) provided with openings (40) arranged opposite an outer surface (38) of the casing in order to cool said casing by the impact of cooling-air jets, **characterised in that** the casing has a plurality of axial grooves (42) comprising first grooves (42A) and second grooves (42B) arranged in alternation such that each first groove (42a) is contiguous to the two second grooves (42B) consecutive thereto, and **in that** the openings are distributed in a plurality of annular rows (44A, 44B) in which any pair of consecutive annular rows (44A, 44B) is such that the openings (40A) of one (44A) of the annular rows of the pair are centred relative to the first grooves (42A), while the openings (40B) of the other annular row (44B) of the pair are centred relative to the second grooves (42B).

2. Assembly according to claim 1, wherein all axial grooves (42, 42A, 42B) have the same shape.

3. Assembly according to any of claims 1 to 2, wherein each of the axial grooves (42) extends continuously opposite a plurality of openings (40) respectively belonging to a plurality of non-consecutive annular rows (44A, 44B).

4. Assembly according to any of claims 1 to 3, wherein the distance (D) between the bottom (46) of each of the axial grooves and the radially inner annular wall (36) of the annular duct (34) lies in the range of three to five times the depth (P) of each of the axial grooves (42).

5. Assembly according to any of claims 1 to 4, wherein the depth (P) of each of the axial grooves is substantially equal to the diameter (Ø) of the openings.

6. Turbine (22) for a turbine engine (10), comprising a rotor (30), in addition to an assembly (32, 34) according to any of claims 1 to 5, the casing (32) of which surrounds the rotor (30) of the turbine.

7. Turbine engine (10) for an aircraft, comprising at least one turbine (22) according to claim 6, in addition to means for supplying cooling air (35) connected to said annular duct (34).
